# FASCICULE DE BREVET EUROPEEN

(11) **EP 2 066 564 B1**
(45) Date de publication et mention de la délivrance du brevet: **15.09.2010**
(21) Numéro de dépôt: 07823490.3
(22) Date de dépôt: 10.09.2007
(51) Int. Cl.: B64C 29/00, B64C 21/04, B64C 21/06, B64C 23/00

(54) **VEHICULE A DECOLLAGE ET ATTERRISSAGE VERTICAL SANS VOILURE TOURNANTE**
SENKRECHT STARTENDES UND LANDENDES FLUGZEUG OHNE DREHFLÜGEL
VERTICAL TAKE-OFF AND LANDING VEHICLE WHICH DOES NOT HAVE A ROTARY WING

(30) Priorité: 25.09.2006 FR 0608353; 18.12.2006 FR 0611002
(43) Date de publication de la demande: 10.06.2009
(73) Titulaire: AGUILAR, Michel, F-31320 Castanet Tolosan (FR)
(72) Inventeur: AGUILAR, Michel, F-31320 Castanet Tolosan (FR)
(74) Mandataire: Junca, Eric
(86) Numéro de dépôt international: PCT/FR2007/001452
(87) Numéro de publication internationale: WO 2008/037865

(56) Documents cités:
- GB-A- 862 032
- GB-A- 955 845
- GB-A- 1 465 412
- US-A- 4 848 701

## Description

La présente invention concerne un véhicule à décollage et atterrissage vertical sans voilure tournante.

A ce jour, seuls les véhicules à voilure tournante (hélicoptères), les aéronefs à voilure propulsive basculante, dits *Convertibles*, et les aéronefs à réaction dont au moins une tuyère est orientable vers le bas, permettent un décollage et un atterrissage vertical, ainsi que le vol stationnaire (sustentation). Le déplacement horizontal étant assuré par un léger basculement vers l'avant du rotor principal pour l'hélicoptère, une rotation d'environ 90 degrés vers l'avant de l'ensemble voilure-force propulsive pour les Convertibles, et une orientation quasi horizontale de la tuyère pour les avions à réaction.

Le véhicule selon l'invention permet de s'affranchir de ces mouvements de rotation et d'orientation mécaniquement complexes pour assurer le décollage et l'atterrissage vertical. Il est fondé sur le constat suivant :
- la turbomachine (réacteur) utilisée pour générer la force propulsive des aéronefs aspire de l'air dans un collecteur d'entrée d'air, le comprime, le mélange à un carburant (kérosène...), provoque sa combustion, puis rejette vers l'arrière à grande vitesse et haute température ces gaz brûlés au travers d'une tuyère.
- la force propulsive étant le produit du débit massique (quasiment le nombre de kg d'air aspiré par seconde) par la différence de vitesses entrée-sortie des gaz.

Dès lors, en positionnant des voilures adaptées (géométrie, incidence et profil variables, épaisseur, matériaux...) en entrée d'air du compresseur de la turbomachine et en sortie tuyère de sorte à ce que ces voilures ne présentent aux flux entrée-sortie de la turbomachine uniquement leurs extrados, une force de portance apparaît qui assure ainsi le décollage et l'atterrissage vertical, comme dans le document GB 955 845.

La turbomachine selon l'invention est caractérisée par son propulseur dénommé ci-après, Thermoréacteur, dont une de ses propriétés est de générer des flux entrée compresseur - sortie tuyère de sections rectangulaires adaptés aux soufflages sur l'extrados des voilures susmentionnées.

A ce jour les turbomachines qui créent une force propulsive se répartissent principalement de la façon suivante :
1 - Le turboréacteurs : il prélèvent une masse d'air dans l'atmosphère, la comprime à l'aide d'un compresseur centrifuge ou axial, la mélange à un carburant (kérosène,...), la brûle dans une chambre de combustion, puis oriente ces gaz brûlés vers une turbine dont la fonction est de transformer une partie de l'énergie thermique en énergie mécanique de rotation pour entraîner le compresseur rendant ainsi la turbomachine autonome. Ces gaz brûlés sont ensuite éjectés à grande vitesse dans l'atmosphère au travers d'une tuyère, produisant alors la force propulsive.
2 - le statoréacteur : d'un agencement mécanique des plus simple (sans compresseur mécanique ni turbine), il permet d'atteindre de très grandes vitesses de déplacement mais nécessite au préalable une vitesse initiale d'avancement importante afin que la compression de l'air puisse se faire par « simple » effet aérodynamique dans son entrée d'air.
3 - le pulsoréacteur, surtout utilisé pendant la dernière guerre par les allemands avec les fameux V1, fonctionnant sur un mode pulsé.

La thermoréacteur selon l'invention cumule les avantages de ces trois modes de propulsion en ce sens qu'un compresseur volumétrique rotatif à palettes, à lobes (Roots) ou équivalent dont l'entrée d'air est de section rectangulaire aspire une masse d'air prélevée dans l'atmosphère pour la comprimer puis l'orientée vers un réservoir dit de transit. De ce réservoir partent différents conduits alimentant :
1 - **le turboréacteur :** via une chambre de combustion ouverte sur une turbine à action (ou réaction) dont la fonction est de convertir une partie de l'énergie calorique produite dans la chambre de combustion en énergie mécanique de rotation nécessaire à l'entraînement du compresseur. Le turboréacteur est alors rendue autonome. L'énergie calorique restante est ensuite transformée en énergie cinétique. Les gaz brûlés sont alors accélérés via une tuyère adaptée et ne souffler que sur l'extrados d'une voilure positionnée en conséquence.
2 - **le statoréacteur :** via une autre chambre de combustion, l'énergie calorique des gaz brûlés hautement énergétiques est totalement convertie en énergie cinétique, et lesdits gaz sont alors directement (plus turbine) orientés par une tuyère adaptée et éjectés à grande vitesse produisant ainsi la force propulsive recherchée.

Par ailleurs, chacun des conduits reliant le réservoir à la chambre de combustion est équipé d'une valve dont la fonction est de commander de façon optimale les différents débits d'air accordés aux phases de fonctionnement du thermoréacteur.

Selon ces différentes phases de Décollage, d'Atterrissage ou de Croisière, les voilures avant et arrière présenteront les propriétés suivantes :

### 1 - Au Décollage

- **Voilure avant :** Pour créer une portance sur cette voilure, des gaz brûlés produits dans une chambre de combustion et sa tuyère de sections rectangulaires logées à l'intérieur même de cette voilure avant, s'écouleront à vitesse conséquente uniquement sur l'extrados à géométrie variable présentant alors une courbure optimale durant cette phase de décollage. Les gaz brûlés s'écouleront ensuite à l'extérieur par une ouverture ménagée sous l'entrée d'air principale du compresseur.

### - Voilure arrière :

1 - Les gaz brûlés du turboréacteur éjectés à grande vitesse de sa chambre de combustion et sa tuyère de sections rectangulaires, après avoir cédé une partie de leur énergie à la turbine pour entraîner le compresseur, s'écouleront sur le seul extrados d'un profil à cambrure fixe, générant ainsi une portance complémentaire.
2 - Les gaz brûlés très énergétiques éjectés de la chambre de combustion de section rectangulaire du propulseur principal (statoréacteur), s'écouleront sur le seul extrados d'une voilure dont l'incidence variable est calée de sorte à générer une portance maximale durant cette phase de décollage.

### 2 - En Croisière

En vol d'avancement, la portance principale est rapidement assurée par le fuselage et sa cabine dessinés autour d'un profil d'aile ; cette portance est complétée par celles des 2 voilures arrières fixes et de la voilure à incidence variable calée de façon à rendre sa traînée minimale :
- **Voilure avant :** la portance développée sur cette voilure ne se justifiant plus - la chambre de combustion est alors éteinte -, son extrados est ramené à une cambrure telle que les forces de traînée sont minimales.
- **Voilure arrière :** En vol d'avancement, cette voilure est ramenée à une incidence qui l'inscrit alors dans le prolongement global du Thermoréacteur de sorte à ne présenter qu'une traînée minimale, tout en générant une portance juste nécessaire.

Deux écopes sont ménagées sur l'extrados et l'intrados du groupe propulseur afin de maintenir une température acceptable sur les voilures arrières soumises en permanence au flux des gaz très chauds éjectés du propulseur principale (statoréacteur) et des turboréacteurs activant les turbines. Ce flux d'air frais participant d'autant à réduire les nuisances sonores.

En cas d'avaries graves, la cabine pourra se détacher du véhicule et poursuivre sa descente suspendue à un parachute ; avant l'impact final, ce dispositif de sécurité est complété par le déploiement d'airbags sous la cabine afin de garantir une protection maximale aux passagers.

Le réservoir et les batteries sont déplaçables de façon à ajuster en permanence le centre de gravité globale en exacte opposition à la résultante des forces de portance.

Durant toutes les phases de décollage, croisière et atterrissage, ce véhicule sera piloté prioritairement par voie satellitaire et/ou tout autre moyen terrestre.

Le carburant utilisé sera de préférence une énergie dite renouvelable de type biocarburant (huile de tournesol, de colza...).

Les dessins annexés illustrent l'invention :

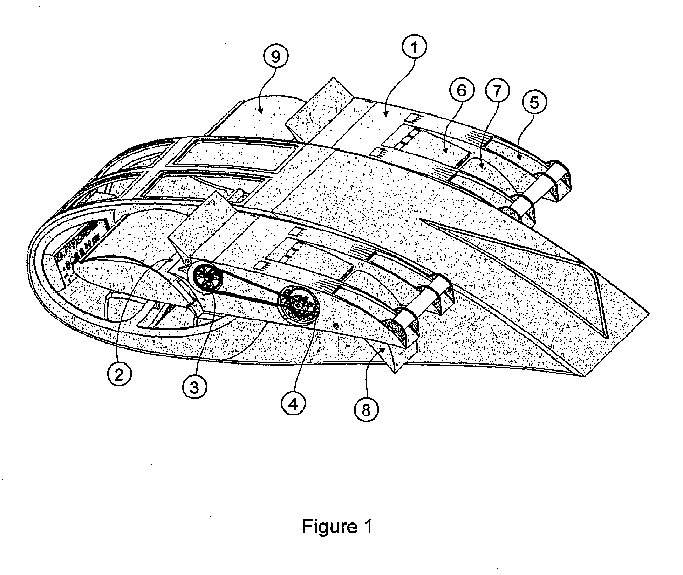

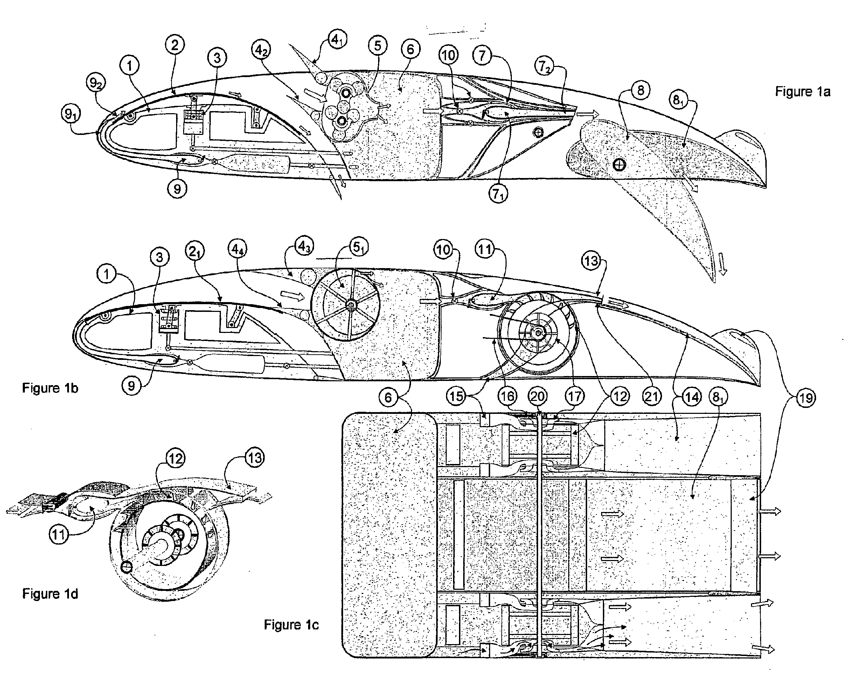

La figure 1a représente en coupe longitudinale le groupe propulseur dénommé ci-après, Thermoréacteur, avec sa voilure avant (1) et son extrados (2) à géométrie variable dont la cambrure - ici maximale pour assurer une portance recherchée en phase décollage - est actionnée par le mécanisme (3), sa chambre de combustion (9) et sa tuyère (9₁) d'éjection des gaz brûlés (9₂). L'entrée d'aspiration du compresseur volumétrique rotatif à lobes (5) type Roots ou à palettes (5₁) figure 1b - dont les becs (4₁) et (4₂) sont en position « décollage » -, alimentant le réservoir (6) en air comprimé est en communication avec la chambre de combustion (7₁) du propulseur principal (7) dont les gaz brûlés, au sortir de sa tuyère (7₂), soufflent sur l'extrados de la voilure arrière (8) positionnée en mode « décollage » ou (8₁) en mode « croisière ».
La figure 1b représente l'extrados (2) de la voilure avant (1) en mode croisière dont la cambrure est ramenée par le mécanisme (3) à un profil offrant une traînée minimale ; la chambre de combustion (9) étant au préalable éteinte. Les becs d'entrée d'air (4₃) et (4₄) sont alors positionnés en mode « croisière ». Via la valve de commande (10), le réservoir (6) d'air comprimé est mis en communication avec la chambre de combustion (11) dont les gaz brûlés activent la turbine (12), puis sont éjectés au travers de la tuyère (13) uniquement sur l'extrados de la voilure (14).
La figure 1c représente l'ensemble de la partie arrière du Thermoréacteur et son réservoir (6) en vue de dessus avec ses deux ensembles : chambre de combustion (11), turbine (12) et sa tuyère (13). Le ventilateur (17) monté sur l'axe de rotation (20) des turbines (12) montées symétriquement, est alimenté en air frais extérieur par l'entrée (15), et via le conduit (21) s'interpose entre les gaz brûlés très chaud en sortie tuyère (13) et l'extrados (14) sur lequel circulent ces gaz. La poulie (16) montée sur l'axe (20) et sa courroie (ou tout autre mécanisme) entraînant le compresseur. Le volet (19) relie les deux ensembles évoqués supra.
La figure 1d représente le turboréacteur par sa chambre de combustion (11) ouverte sur la turbine (12) et dont les gaz brûlés sont éjectés via la tuyère (13).

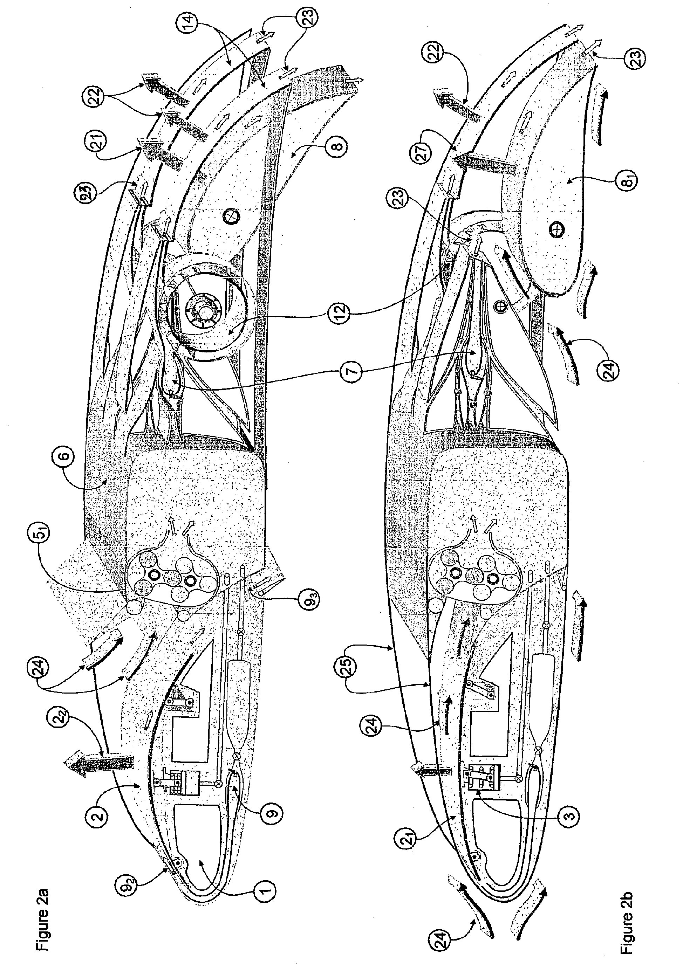

La figure 2a représente le Thermoréacteur en perspective dans sa configuration décollage où l'extrados (2) de sa voilure avant (1) présente une cambrure maximale afin d'y développer la portance (2₁) sous l'action du flux des gaz brûlés (9₂) s'écoulant sur ladite cambrure et s'échappant par le tuyère (9₃).
   L'air frais extérieur (24) est aspiré via l'entrée d'air du compresseur (5₁) puis stocké dans le réservoir (6) pour alimenter le propulseur principal (7) et développer la portance (2₁) par le soufflage des gaz brûlés uniquement sur l'extrados de la voilure arrière (8) représentée ici en position décollage. Les gaz brûlés (23) au sortir de la turbine (12) - et symétrique -, s'écoulent uniquement sur les extrados (14) pour produire les portances (22).
La figure 2b représente le Thermoréacteur en perspective dans sa configuration croisière où l'extrados (2) de sa voilure avant (1) présente ici une cambrure minimale sous l'action du mécanisme (3), l'air frais extérieur (24) contournant alors ladite voilure en étant toujours guidé latéralement sur son extrados par les flasques (25) jusqu'à l'entrée d'air (4) du compresseur (5₁); la voilure arrière (8₁) reprenant alors une incidence adaptée à la configuration croisière mais toujours soumise sur son extrados au flux des gaz brûlés (23) émis par le propulseur principal (7), et recevant sur son intrados en vol d'avancement le flux d'air extérieur (24) développant ainsi la portance (27).

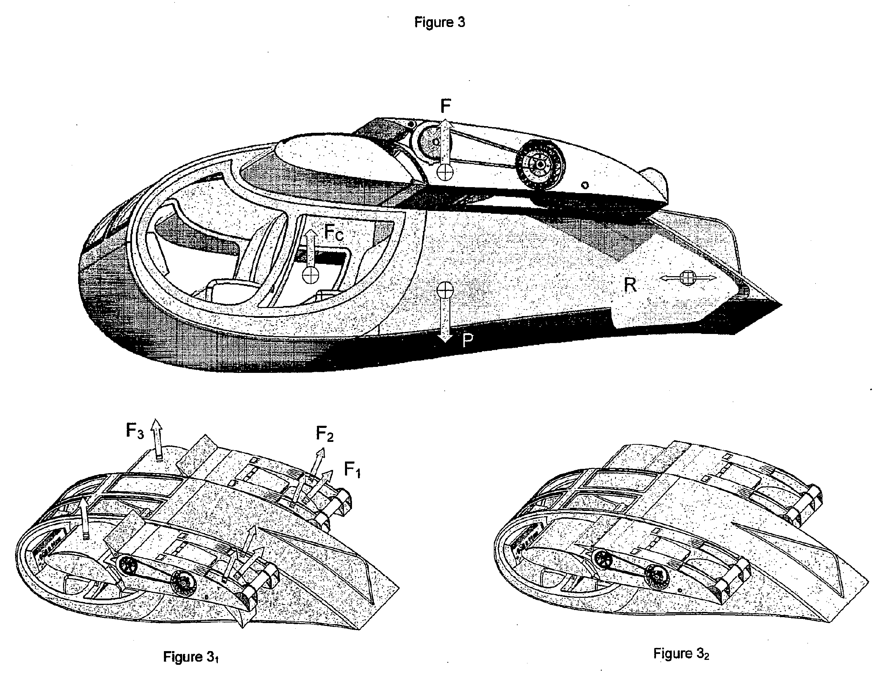

La figure 3 représente une architecture possible de ce véhicule à décollage vertical dont les deux Thermoréacteur sont positionnés symétriquement par rapport à l'ensemble fuselage-cabine pouvant accueillir quatre passagers. La force de portance F_{C} générée par cet ensemble représente près des 2/3 de la portance globale. La figure 3₁ représente le véhicule en mode « Décollage » et ses portances F₁, F₂, F₃ développées par les voilures avant et arrières (fixes et variable) ; la figure 3₂ représente ce véhicule en mode « Croisière ».

Le réservoir de carburant R et la batterie logés dans le fuselage peuvent être déplacés de façon à maintenir en permanence l'équilibre statique et dynamique du véhicule.

## Revendications

1. Véhicule à décollage et atterrissage vertical comportant une voilure avant à géométrie variable (1), une voilure arrière à géométrie variable (8), une voilure arrière à géométrie fixe (14), une fuselage et une cabine de passagers **caractérisé en ce que** chacune de ses turbomachines dénommée ci-après, Thermoréacteur, est constituée d'un compresseur volumétrique rotatif à lobes (5), à palettes (5₁), centrifuge ou équivalent dont la section d'aspiration rectangulaire (4) alimente en air comprimé un réservoir (6) relié d'une part, à deux chambres de combustion symétriques (11) dont les gaz brûlés actionnent deux turbines symétriques à réaction (12) entraînant le compresseur (5₁), puis sont évacués par une tuyère (13) de section rectangulaire uniquement sur l'extrados (14) de la voilure arrière à géométrie fixe créant ainsi une portance, et d'autre part, à une autre chambre de combustion (7₁) du propulseur principal (7) de section rectangulaire dont les gaz brûlés (7₂) sont directement orientés sur l'extrados de la voilure arrière à géométrie variable (8) dont l'incidence, en mode décollage, est déplacée de telle sorte à générer une portance, puis, en mode croisière, est ramenée afin de générer des forces de portance et de traînée optimales.

2. Véhicule selon la revendication 1 **caractérisé en ce que**, en mode décollage, sous l'action d'un mécanisme (3) pneumatique à ressort de rappel ou équivalent, l'extrados (2) relié à la voilure avant à géométrie variable (1) par des articulations appropriées, présente alors une cambrure maximale sur lequel s'écoulent des gaz brûlés (9₂) produits dans une 3ème chambre de combustion (9) de même architecture que la chambre de combustion (7₁), créant alors une force de portance (2₁), gaz évacués ensuite à l'extérieur via la tuyère (9₃) - ouverture ménagée sous l'entrée d'air du compresseur -, et en mode croisière - la 3ème chambre de combustion (9) étant éteinte -, cet extrados (2) de la voilure avant à géométrie variable (1) est ramené par le mécanisme (3) à une cambrure telle que la voilure avant (1) présente un profil à traînée minimale.

3. Véhicule selon l'une quelconque des revendications précédentes **caractérisé en ce que** le réservoir de carburant et la batterie électrique, tous deux logés dans le fuselage, sont rendus mobiles afin de maintenir l'équilibre statique et dynamique du véhicule lors de ses différents modes de vol.

4. Véhicule selon l'une quelconque des revendications précédentes **caractérisé en ce que** la cabine passagers, en cas d'avarie grave, peut se détacher dudit véhicule puis, après déploiement d'airbags sous son plancher et ouverture d'un parachute, poursuivre sa descente jusqu'au au sol en préservant l'intégrité physique des passagers.

## Claims

1. Vertical take-off and landing vehicle comprising a variable-geometry front wing (1), a variable-geometry rear wing (8), a fixed-geometry rear wing (14), a fuselage and a passenger cabin, **characterized in that** each of its turbomachines, hereinafter called a "thermoreactor", consists of a lobed rotary volumetric compressor (5), with vanes (5₁), centrifuge or equivalent, the rectangular aspiration section (4) of which supplies compressed air to a reservoir (6) connected on the one hand to two symmetric combustion chambers (11) the burnt gases of which drive two symmetric reaction turbines (12) driving the compressor (5₁) and are then discharged via a nozzle (13) of rectangular section only on the suction surface (14) of the rear, fixed-geometry wing thus creating lift, and, on the other hand, to another combustion chamber (7₁) of the main propulsion unit (7) of rectangular section, the burnt gases (7₂) of which are oriented directly to the suction surface of the rear, variable-geometry wing (8), the incidence of which, in take-off mode, is moved so as to generate lift, then, in cruising mode, is returned in order to generate optimal lift and drag forces.

2. Vehicle according to Claim 1, **characterized in that**, in take-off mode, under the action of a pneumatic mechanism (3) with return spring or equivalent, the suction surface (2) connected to the front, variable-geometry wing (1) by appropriate articulations, then has a maximum camber over which flow burnt gases (9₂) produced in a 3^{rd} combustion chamber (9) with the same architecture as the combustion chamber (7₁), then creating a lift force (2₁), gases then discharged to the outside via the nozzle (9₃) - opening arranged beneath the air inlet of the compressor -, and in cruising mode - the 3^{rd} combustion chamber (9) being switched off -, this suction surface (2) of the front, variable-geometry wing (1) is returned by the mechanism (3) to a camber such that the front wing (1) exhibits a profile with minimum drag.

3. Vehicle according to either one of the preceding claims, **characterized in that** the fuel reservoir and the electric battery, both housed in the fuselage, are made moveable in order to maintain the static and dynamic balance of the vehicle during its various modes of flight.

4. Vehicle according to any one of the preceding claims, **characterized in that** the passenger cabin, in the event of serious damage, can be detached from the said vehicle then, after deployment of air bags beneath its floor and opening of a parachute, can continue its descent to the ground while preserving the physical integrity of the passengers.

## Patentansprüche

1. Vertikal startendes und landendes Fahrzeug, mit eine vorderen Tragfläche (1) mit variabler Geometrie, einer hinteren Tragfläche (8) mit variabler Geometrie, einer hinteren Tragfläche (14) mit fester Geometrie, einem Rumpf und einer Passagierkabine, **dadurch gekennzeichnet, dass** jedes seiner Turbotriebwerke, das im Folgenden Thermoreaktor genannt wird, aus einem rotierenden Verdrängerverdichter mit Keulen (5), Flügeln (5₁), einer Zentrifuge oder dergleichen gebildet ist, dessen rechtwinkliger Saugabschnitt (4) einen Vorratsbehälter (6) mit Druckluft versorgt, der verbunden ist einerseits mit zwei symmetrischen Verbrennungskammern (11), deren Abgase zwei symmetrische Reaktionsturbinen (12) betätigen, die den Verdichter (5₁) antreiben, und dann durch eine Rohrleitung (13) mit rechtwinkligem Querschnitt ausschließlich auf die Saugfläche (14) des hinteren Flügels mit fester Geometrie abgeführt werden, um **dadurch** einen Auftrieb zu erzeugen, und andererseits mit einer anderen Verbrennungskammer (7₁) des Haupttriebwerks (7) mit rechtwinkligem Querschnitt, deren Abgase (7₂) direkt auf die Oberseite der hinteren Tragfläche (8) mit variabler Geometrie gelenkt werden, deren Anstellung im Startbetrieb in der Weise verstellt wird, dass ein Auftrieb erzeugt wird, und dann im Normalflugbetrieb zurückgestellt wird, um optimale Auftriebs- und Widerstandskräfte zu erzeugen.

2. Fahrzeug nach Anspruch 1, **dadurch gekennzeichnet, dass** im Startbetrieb unter der Wirkung eines Druckluftmechanismus (3) mit Rückstellfeder oder dergleichen die Saugfläche (2), die mit der vorderen Tragfläche (1) mit variabler Geometrie über geeignete Gelenke verbunden ist, dann eine maximale Krümmung aufweist, auf der die Abgase (9₂) strömen, die in einer dritten Verbrennungskammer (9) mit der gleichen Architektur wie die Verbrennungskammer (7₁) erzeugt werden, wodurch eine Auftriebskraft (2₁) erzeugt wird, wobei die Gase anschließend durch die Rohrleitung (9₃) - unter dem Lufteinlass des Verdichters ausgebildete Öffnung - abgeführt werden, und wobei im Normalflugbetrieb - in dem die dritte Verbrennungskammer (9) ausgeschaltet ist - diese Saugfläche (2) der vorderen Tragfläche (1) mit variabler Geometrie durch den Mechanismus (3) in eine Krümmung zurückgestellt ist, derart, dass die vordere Tragfläche (1) ein Profil mit minimalem Widerstand aufweist.

3. Fahrzeug nach einem der vorhergehenden Ansprüche, **dadurch gekennzeichnet, dass** der Brennstoffbehälter und die elektrische Batterie, die sich beide im Rumpf befinden, beweglich ausgebildet sind, um das statische und das dynamische Gleichgewicht des Fahrzeugs während der verschiedenen Flugbetriebarten aufrecht zu erhalten.

4. Fahrzeug nach einem der vorhergehenden Ansprüche, **dadurch gekennzeichnet, das** sich die Passagierkabine im Fall einer schweren Havarie vom Fahrzeug lösen kann und dann nach dem Entfalten von Luftsäcken unter ihrer Decke und dem Öffnen eines Fallschirms ihren Sinkflug bis zum Boden ausführt, wobei die physische Unversehrtheit der Passagiere gewährleistet ist.
